# EUROPÄISCHE PATENTSCHRIFT

(11) **EP 1 034 542 B1**
(45) Veröffentlichungstag und Bekanntmachung des Hinweises auf die Patenterteilung: **05.06.2002**
(21) Anmeldenummer: 98966168.1
(22) Anmeldetag: 25.11.1998
(51) Int. Cl.: G21C 15/18

(54) **VORRICHTUNG ZUR ZUFUHR EINES NEUTRONENABSORBIERENDEN FLUIDES IN DEN PRIMÄRKREISLAUF EINES DRUCKWASSERKERNREAKTORS UND VERFAHREN ZUR ERHÖHUNG DER NEUTRONENABSORPTION IN EINEM SOLCHEN PRIMÄRKREISLAUF**
DEVICE FOR SUPPLYING A NEUTRON-ABSORBING FLUID INTO THE PRIMARY CIRCUIT OF A PRESSURISED WATER NUCLEAR REACTOR AND PROCESS FOR INCREASING NEUTRON ABSORPTION IN SUCH A REACTOR
DISPOSITIF POUR L'AMENEE D'UN FLUIDE A ABSORPTION DE NEUTRONS DANS LE CIRCUIT PRIMAIRE D'UN REACTEUR NUCLEAIRE A EAU SOUS PRESSION ET PROCEDE POUR L'AUGMENTATION DE L'ABSORPTION DE NEUTRONS DANS UN TEL CIRCUIT PRIMAIRE

(30) Priorität: 27.11.1997 DE 19752668
(43) Veröffentlichungstag der Anmeldung: 13.09.2000
(73) Patentinhaber: Framatome ANP GmbH, 91050 Erlangen (DE)
(72) Erfinder: CONRADS, Hermann-Josef, D-91074 Herzogenaurach (DE); HARTMANN, Heinz-Werner, D-91054 Buckenhof (DE)
(74) Vertreter: Tergau & Pohl Patentanwälte
(86) Internationale Anmeldenummer: DE9803480
(87) Internationale Veröffentlichungsnummer: WO9928915

(56) Entgegenhaltungen:
- EP-A- 0 405 720
- EP-A- 0 418 701
- EP-A- 0 578 392
- DE-A- 4 344 323
- FR-A- 2 172 152
- PATENT ABSTRACTS OF JAPAN vol. 097, no. 009, 30. September 1997 & JP 09 113669 A (HITACHI LTD), 2. Mai 1997
- PATENT ABSTRACTS OF JAPAN vol. 018, no. 281 (P-1744), 27. Mai 1994 & JP 06 051086 A (TOSHIBA CORP), 25. Februar 1994

## Beschreibung

Vorrichtung zur Zufuhr eines neutronenabsorbierenden Fluides in den Primärkreislauf eines Druckwasserkernreaktors und Verfahren zur Erhöhung der Neutronenabsorption in einem solchen Primärkreislauf

Die Erfindung befaßt sich mit der Erhöhung der Neutronenabsorption in dem den Reaktordruckbehälter umfassenden Primärkreislauf eines Druckwasserkernreaktors.

Sie betrifft zum einen eine Vorrichtung zur Zufuhr eines neutronenabsorbierenden Fluides in den Primärkreislauf eines Druckwasserkernreaktors mit einem Behälter, der mit dem Fluid befüllbar und über eine Förderpumpe und eine Zufuhrleitung mit dem Primärkreislauf in Verbindung bringbar ist. Gegenstand der Erfindung ist auch ein Verfahren zur Erhöhung der Neutronenabsorption in dem Primärkreislauf eines Druckwasserkernreaktors, wobei aus einem Behälter dem Primärkreislauf ein neutronenabsorbierendes Fluid zugeführt wird.

Es ist bekannt, in bestimmten Störfallsituationen eines Druckwasserkernreaktors Borsäure oder Borwasser in den ein Kühlmittel führenden Primärkreislauf einzuspeisen und den Kernreaktor auf diese Weise mittelfristig abzuschalten (Zusatzboriersystem). Das Bor dient dabei der Absorption thermischer Neutronen bzw. der Erhöhung dieser Absorption im Kühlmittel.

In der Europäischen Patentanmeldung 0 405 720 A2 ist ein passives Sicherheitseinspeisesystem beschrieben, das auf Dichteunterschieden im Wasser beruht und durch Naturumlauf eine gewünschte Borkonzentration erzeugen bzw. aufrechterhalten soll. Ein derartiges Naturumlaufsystem ist kompliziert und läßt sich den vielfältig unterschiedlichen Schadensfällen nur ungenügend und unzuverlässig anpassen.

In der Deutschen Patentschrift DE 22 07 870 C3 ist u.a. ein aktives Zusatzboriersystem beschrieben, das außerhalb des Reaktorsicherheitsbehälters installiert ist. Es besteht im wesentlichen aus einem Borwasserbehälter, einer Zusatzborierpumpe und einer Zufuhrleitung zur Einspeisung des Borwassers in den Primärkreislauf. Der von der Zusatzborierpumpe zu erzeugende Förderdruck (Förderhöhe) liegt in den meisten Störfallsituationen zwar unterhalb des Kühlmitteldrucks im Primärkreislauf bei Normalbetrieb, da bei einem Leck der Kühlmitteldruck im Primärkreislauf sinkt. Trotzdem muß die Zusatzborierpumpe zur Erzeugung sehr hoher Förderdrücke in der Lage sein, insbesondere um auch solche Störfälle zu beherrschen, bei denen der Kühlmitteldruck im Primärkreislauf nur geringfügig sinkt.

In der Deutschen Offenlegungsschrift DE 43 44 323 A1 ist ein Druckwasserkernreaktor offenbart, bei dem ein Sicherheitseinspeisesystem und ein aktives Zusatzboriersystem derart zusammengefaßt sind, daß sie mit einem gemeinsamen Einspeisestrang ausgeführt werden können. Das Zusatzboriersystem weist einen Borierbehälter und eine Zusatzborierpumpe auf, die außerhalb des Reaktorsicherheitsbehälters angeordnet sind. Über den Einspeisestrang ist das in dem Borierbehälter gespeicherte borhaltige Fluid einer Hauptkühlmittelleitung des Primärkreislaufs zuführbar. Wie diejenige des vorgenannten Systems so muß auch die Zusatzborierpumpe dieses Systems einen hohen Förderdruck erzeugen, um entgegen dem in einer Kühlmittelleitung des Primärkreislaufes vorherrschenden Kühlmitteldruck, im folgenden Gegendruck oder Kühlmittelgegendruck genannt, eine Einspeisung von borhaltigem Fluid in den Primärkreislauf zu bewirken.

Ausgehend von dem letztgenannten bekannten aktiven System zur Schadensbegrenzung bei einem Störfall an einem Druckwasserreaktor liegt der Erfindung die Aufgabe zugrunde, eine Vorrichtung anzugeben, die in der Lage ist, weitgehend unabhängig von dem im Primärkreislauf herrschenden Kühlmittelgegendruck, insbesondere bei einem sehr großen Kühlmittelgegendruck, ein neutronenabsorbierendes Fluid zuverlässig und sicher dem Primärkreislauf zuzuführen. Im Vergleich zum bekannten aktiven System soll bei der anzugebenden Vorrichtung - in der Mehrzahl denkbarer Störfälle - nur ein geringerer Förderdruck aktiv zu erzeugen nötig sein, um die Zufuhr des neutronenabsorbierenden Fluides in den Primärkreislauf zu bewirken.

Es ist gleichfalls Aufgabe der Erfindung, ein Verfahren zur Erhöhung der Neutronenabsorption in einem Primärkreislauf eines Druckwasserkernreaktors zur Verfügung zu stellen, wobei aus einem Behälter dem Primärkreislauf ein neutronenabsorbierendes Fluid zuverlässig und sicher zugeführt wird, und dabei im Gegensatz zu bekannt gewordenen Verfahren nur ein geringer Förderdruck nötig sein soll. Das Verfahren soll somit in einem weiten Bereich unabhängig von dem aktuellen im Primärkreislauf herrschenden Kühlmittelgegendruck sicher und zuverlässig arbeiten.

Die auf eine Vorrichtung bezogene Aufgabe wird gemäß der Erfindung dadurch gelöst, daß der Behälter und die Förderpumpe über eine Druckleitung mit einem aus dem Primärkreislauf abgeleiteten ersten Druck beaufschlagbar sind.

Das Fluid kann Borsäure enthalten, die z.B. mit dem Borisotop B 10 angereichert ist.

Die Druckleitung zweigt z.B. an einer ersten Stelle von dem Primärkreislauf ab, an der ein als Nutzdruck bezeichneter Druck im Kühlmittel des Primärkreislaufes herrscht.

Für eine Zufuhr des Fluids in den Primärkreislauf ist insbesondere ein zweiter Druck notwendig, der zumindest so groß wie ein Gegendruck sein muß, der im Kühlmittel an einer zweiten Stelle des Primärkreislaufes herrscht, an der das Fluid zuführbar ist. Bei der Vorrichtung nach der Erfindung ist der erste Druck ein wesentlicher Bestandteil des zweiten Druckes, d.h. der zweite Druck muß zum größten Teil nicht gesondert erzeugt werden. Die Vorrichtung bietet demzufolge den Vorteil, auch bei einem sehr hohen Gegendruck im Kühlmittel im Primärkreislauf noch zuverlässig zu arbeiten, da mit dem Gegendruck der Druck im gesamten Primärkreislauf und somit auch der erste Druck in dem Behälter und in der Förderpumpe - in im wesentlichen gleichem Maße - ansteigt. Die Förderpumpe muß demzufolge nur einen geringen Förderdruck erzeugen, der im wesentlichen durch die Differenz zwischen dem ersten Druck und dem Gegendruck im Primärkreislauf gegeben ist. Diese Druckdifferenz kann beispielsweise durch die Strömungsverluste der Rohrleitungen und unter Umständen durch die Förderhöhe von Kühlmittelpumpen im Primärkreislauf bedingt sein.

Dadurch, daß mit der Vorrichtung nach der Erfindung die Notwendigkeit zur Erzeugung sehr hoher Förderdrücke vermieden wird, ist die Sicherheit eines entsprechend ausgerüsteten Druckwasserkernreaktors vorteilhaft erhöht.

Der Behälter und die Förderpumpe können beispielsweise in Reihe geschaltet sein. An dem einen Ende der Reihenschaltung mündet z.B. die Zufuhrleitung, und von dem anderen Ende geht z.B. die Druckleitung aus.

Einer speziellen Ausgestaltung der Vorrichtung zufolge sind der Behälter und/oder die Förderpumpe innerhalb eines Sicherheitsbehälters des Druckwasserkernreaktors angebracht. Dadurch wird die Sicherheit des Kernreaktors weiter gesteigert.

Eine ganz besonders bevorzugte Ausgestaltung der Vorrichtung sieht vor, daß die Förderpumpe von einer Turbine antreibbar ist. Eine solche Turbine kann beispielsweise eine Francisturbine sein.

Im Gegensatz zu einem elektrischen Antrieb bietet der Antrieb durch eine Turbine den Vorteil, daß keine Leitungen zur Zufuhr elektrischer Energie notwendig sind.

Die Turbine kann insbesondere von einem Medium antreibbar sein, das von einer Einspeisepumpe in Strömung versetzt ist. Die Einspeisepumpen der meisten Druckwasserkernreaktoren fördern nämlich selbst im Störfall eine gewisse Mindestmenge an Medium (z.B. Wasser), die in jedem Fall ausreicht, die Turbine und die damit verbundene Förderpumpe anzutreiben.

Bevorzugt ist ein Steuerventil zur Einstellung eines Durchflusses durch die Turbine vorgesehen, wodurch in vorteilhafter Weise die Drehzahl der Turbine und damit der von der Förderpumpe erzeugte Durchsatz und Förderdruck gesteuert werden können. Insbesondere ist damit ein langsames Anfahren der Turbine möglich.

Die auf ein Verfahren bezogene Aufgabe wird gemäß der Erfindung dadurch gelöst, daß der Behälter mit einem aus dem Primärkreislauf abgeleiteten ersten Druck beaufschlagt wird.

Die Zufuhr des neutronenabsorbierenden Fluides in den Primärkreislauf wird insbesondere durch einen in eben diesem Primärkreislauf herrschenden Kühlmitteldruck, einen sogenannten Nutzdruck, - oder einen Teilbetrag davon - unterstützt. Dadurch ist das Verfahren in vorteilhafter Weise auch bei einem sehr hohen - im Primärkreislauf im Kühlmittel an der Stelle der Zufuhr des Fluides vorherrschenden - Gegendruck einsetzbar, da mit dem Gegendruck auch der erste Druck im Behälter wächst.

Das Verfahren ist beispielsweise in zwei Schritten durchführbar, wonach
a) zunächst der Behälter mit dem ersten Druck beaufschlagt wird, und
b) dann dem Primärkreislauf das Fluid zugeführt wird.

Bei einem derartigen Ausgestaltung ist die Funktionssicherheit des Verfahrens erhöht.

Infolge von Strömungsverlusten in den Rohrleitungen oder in den Hauptkühlmittelpumpen des Primärkreislaufes kann es vorkommen, daß der erste Druck im Behälter geringfügig von dem Gegendruck im Primärkreislauf abweicht. Die in diesem Falle zur Zufuhr des Fluides in den Primärkreislauf noch nötige Energie wird dann beispielsweise aus der Strömungsenergie eines Mediums gewonnen. Dabei kann z.B. das Medium über eine Turbine eine Förderpumpe für das Fluid antreiben. Dadurch wird in vorteilhafter Weise insbesondere keine zusätzliche elektrische Energie, z.B. für eine Pumpe, benötigt.

Das Medium kann z.B. von einer Einspeisepumpe in Strömung versetzt werden. Die von Einspeisepumpen der gängigen Druckwasserreaktoren erzeugte Strömung enthält in allen denkbaren Situationen bei weitem genügend Energie, um die zur Zufuhr des Fluides in den Primärkreislauf nötige Energie bereitzustellen.

Bei dem Verfahren kommt bevorzugt ein neutronenabsorbierendes Fluid zum Einsatz, das Borsäure enthält. Die Borsäure ist einer besonders bevorzugten Ausgestaltung des Verfahrens zufolge mit dem Borisotop mit der Massenzahl 10 (B 10) angereichert, wodurch das Volumen des Behälters, der das neutronenabsorbierende Fluid enthält, besonders klein gewählt werden kann.

Ein Ausführungsbeispiel einer Vorrichtung nach der Erfindung wird anhand der schematischen Zeichnung näher erläutert.

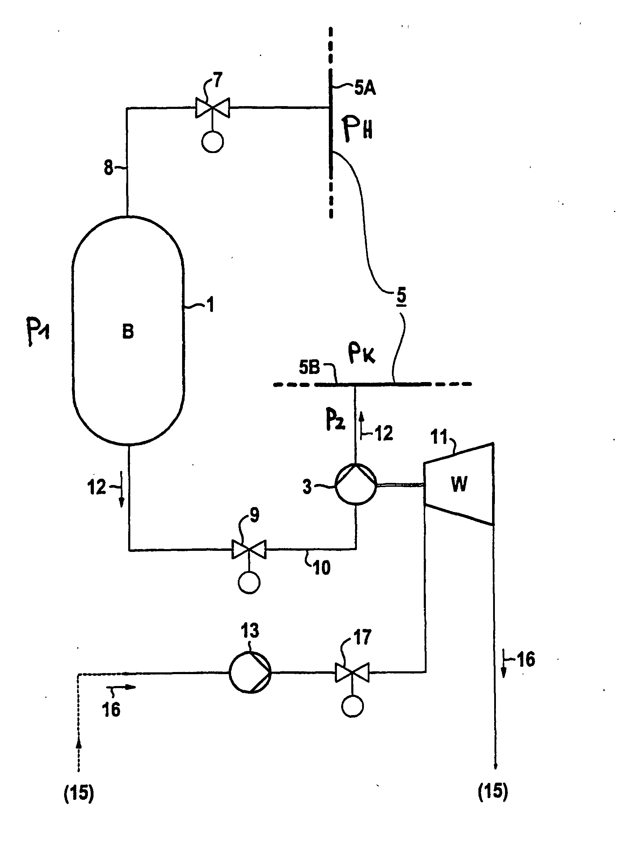

Die einzige Figur zeigt einen ein neutronenabsorbierendes Fluid B (z.B. Borsäure, mit B 10 angereicherte Borsäure, Borwasser) enthaltenden Behälter 1 und in Reihe geschaltet dazu eine Förderpumpe 3. Der ein Kühlmittel (Wasser) führende Primärkreislauf 5 eines Druckwasserkernreaktors ist mit einem heißen Strang 5A und einem kalten Strang 5B angedeutet. Der Behälter 1 ist über ein erstes Absperrventil 7 und eine Druckleitung 8 mit dem heißen Strang 5A des Primärkreislaufes 5 verbindbar. Im Normalbetrieb ist das erste Absperrventil 7 geschlossen und der Behälter 1 drucklos.

Durch Öffnen des ersten Absperrventiles 7 ist der Behälter 1 - z.B. bei einem Störfall - mit einem ersten Druck p₁ beaufschlagbar, der von einem in dem heißen Strang 5A des Primärkreislaufes 5 vorherrschenden Kühlmitteldruck, im folgenden Nutzdruck p_{H} genannt, abhängt. Bis auf Verluste, etwa in dem Absperrventil 7 und/ oder der Druckleitung 8, ist der erste Druck p₁ gleich dem Nutzdruck p_{H} (p₁ ≈ p_{H}).

Über ein zweites Absperrventil 9, die Förderpumpe 3 sowie eine Zufuhrleitung 10 ist der Behälter 1 auch mit dem kalten Strang 5B des Primärkreislaufes 5 verbindbar, bzw. bei geöffnetem zweiten Absperrventil 9 verbunden.

Die Förderpumpe 3 ist von einer Turbine 11 angetrieben. Bei geöffnetem ersten Absperrventil 7 und gleichzeitig geöffnetem zweiten Absperrventil 9 ist mittels der angetriebenen Förderpumpe 3 das neutronenabsorbierende Fluid B entlang der eingezeichneten Strömungsrichtung 12 dem kalten Strang 5B des Primärkreislaufes 5 zuführbar.

Die Förderpumpe 3 erzeugt einen Förderdruck p_{F}. Unmittelbar an der Stelle der Einmündung der Zufuhrleitung 10 in den kalten Strang 5B herrscht ein zweiter Druck p₂, der sich im wesentlichen aus der Summe des ersten Druckes p₁ und des Förderdruckes p_{F} zusammensetzt (p₂ = p₁ + p_{F}). Die Zufuhr von Fluid B in den kalten Strang 5B ist möglich, falls der zweite Druck p₂ größer ist als ein Gegendruck p_{K} im kalten Strang 5B (d.h. p₂ > p_{K} ist Bedingung für die Zufuhr von Fluid in den Primärkreislauf). Ohne Einschränkung der allgemeinen Funktionsfähigkeit der Vorrichtung sei vereinfachend angenommen, daß im heißen Strang 5A und im kalten Strang 5B annähernd der gleiche Kühlmitteldruck (p_{K} ≈ p_{H}) herrscht. Dann muß die Förderpumpe 3 nur einen vergleichsweise sehr kleinen Förderdruck p_{F} erzeugen gemäß der Ungleichung:

p_{F} = p₂ - p₁ > p_{K} - p₁ ≈ p_{K} - p_{H} ≈ 0

Die Förderpumpe 3 ist als Kreiselpumpe ausgeführt und aus Sicherheitsgründen für einen Förderdruck von 10-15 bar und einen Durchsatz von 5-10 l/s ausgelegt.

Die Turbine 11 wird von einem Medium W angetrieben, das von einer Einspeisepumpe 13 des Druckwasserreaktors in Strömung versetzt ist. Das Medium W (Wasser) wird durch die Einspeisepumpe 13 aus einem nicht explizit dargestellten Tank 15 angesaugt und entlang der angedeuteten Strömungsrichtung 16 wieder in den Tank 15 gefördert.

Bei dem Tank 15 handelt es sich um einen innerhalb des Sicherheitsbehälters des Druckwasserkernreaktors liegenden Flutbehälter.

Durch den Antrieb der Förderpumpe 3 über die z.B. als Francisturbine ausgeführte Turbine 11 ist die Förderpumpe 3 weitgehend unabhängig von den Umgebungsbedingungen, da über die Einspeisepumpe 13 stets genügend Antriebsleistung zur Verfügung steht. Die Vorrichtung zur Zufuhr des Fluides ist deshalb auch unter Berücksichtigung sicherheitstechnischer Aspekte innerhalb des Sicherheitsbehälters anbringbar.

Mittels eines Steuerventils 17 kann der Durchfluß an Medium W durch die Turbine 11 eingestellt werden. Dadurch läßt sich insbesondere die Turbine 11 und damit die Förderpumpe 3 langsam starten und die Förderpumpe 3 regeln.

## Patentansprüche

1. Vorrichtung zur Zufuhr eines neutronenabsorbierenden Fluides (B) in den Primärkreislauf (5) eines Druckwasserkernreaktors, mit
a) einem Behälter (1), der mit dem Fluid (B) befüllbar und
b) über eine Förderpumpe (3) und
c) eine Zufuhrleitung (10) mit dem Primärkreislauf (5) in Verbindung bringbar ist,
**dadurch gekennzeichnet, daß**
der Behälter (1) und die Förderpumpe (3) über
d) eine Druckleitung (8) mit einem aus dem Primärkreislauf (5) abgeleiteten ersten Druck (p₁) beaufschlagbar sind.

2. Vorrichtung nach Anspruch 1,
**dadurch gekennzeichnet,daß** der Behälter (1) und/ oder die Förderpumpe (3) innerhalb eines Sicherheitsbehälters des Druckwasserkernreaktors angebracht sind.

3. Vorrichtung nach einem der Ansprüche 1 oder 2,
**dadurch gekennzeichnet, daß** die Förderpumpe (3) von einer Turbine (11) antreibbar ist.

4. Vorrichtung nach Anspruch 3,
**dadurch gekennzeichnet, daß** die Turbine (11) eine Francisturbine ist.

5. Vorrichtung nach einem der Ansprüche 3 oder 4,
**dadurch gekennzeichnet, daß** die Turbine (11) von einem Medium (W) antreibbar ist, das von einer Einspeisepumpe (13) in Strömung versetzt ist.

6. Vorrichtung nach Anspruch 5,
**dadurch gekennzeichnet, daß** ein Steuerventil (17) zur Einstellung eines Durchflusses durch die Turbine (11) vorgesehen ist.

7. Verfahren zur Erhöhung der Neutronenabsorption in dem Primärkreislauf (5) eines Druckwasserkernreaktors, wobei aus einem Behälter (1) dem Primarkreislauf (5) ein neutronenabsorbierendes Fluid (B) zugeführt wird,
**dadurch gekennzeichnet, daß** der Behälter (1) mit einem aus dem Primärkreislauf (5) abgeleiteten ersten Druck (p₁) beaufschlagt wird.

8. Verfahren nach Anspruch 7,
**dadurch gekennzeichnet, daß**
a) zunächst der Behälter (1) mit dem ersten Druck (p₁) beaufschlagt wird, und
b) dann dem Primärkreislauf (5) das Fluid (B) zugeführt wird.

9. Verfahren nach einem der Ansprüche 7 oder 8,
**dadurch gekennzeichnet, daß** die zur Zufuhr des Fluides (B) in den Primärkreislauf (5) nötige Energie aus der Strömungsenergie eines Mediums (W) gewonnen wird.

10. Verfahren nach Anspruch 9,
**dadurch gekennzeichnet, daß** das Medium (W) von einer Einspeisepumpe (13) in Strömung versetzt wird.

11. Verfahren nach einem der Ansprüche 7 bis 10,
**dadurch gekennzeichnet, daß** das neutronenabsorbierende Fluid (B) Borsäure enthält.

12. Verfahren nach Anspruch 11,
**dadurch gekennzeichnet, daß** die Borsäure mit dem Borisotop der Massenzahl 10 (B 10) angereichert ist.

## Claims

1. Device for supplying a neutron-absorbing fluid (B) to the primary circuit (5) of a pressurized water nuclear reactor, having
a) a container (1) which can be filled with the fluid (B) and,
b) by way of a conveying pump (3) and
c) a supply line (10), can be connected to the primary circuit (5),
**characterized in that**
it is possible to apply to the container (1) and the conveying pump (3) by way of
d) a pressure line (8) a first pressure (p₁) that is derived from the primary circuit (5).

2. Device according to claim 1, **characterized in that** the container (1) and/or the conveying pump (3) are fitted within a containment vessel of the pressurized water nuclear reactor.

3. Device according to one of claims 1 or 2, **characterized in that** the conveying pump (3) can be driven by a turbine (11).

4. Device according to claim 3, **characterized in that** the turbine (11) is a Francis turbine.

5. Device according to one of claims 3 or 4, **characterized in that** the turbine (11) can be driven by a medium (W) which is set flowing by a feed pump (13).

6. Device according to claim 5, **characterized in that** a control valve (17) is provided to set a flow rate through the turbine (11).

7. Method for increasing the neutron absorption in the primary circuit (5) of a pressurized water nuclear reactor, with a neutron-absorbing fluid (B) being supplied to the primary circuit (5) from a container (1), **characterized in that** a first pressure (p₁) that is derived from the primary circuit (5) is applied to the container (1).

8. Method according to claim 7, **characterized in that**
a) in the first instance the first pressure (p₁) is applied to the container (1), and
b) then the fluid (B) is supplied to the primary circuit (5).

9. Method according to one of claims 7 or 8, **characterized in that** the energy that is required to supply the fluid (B) to the primary circuit (5) is obtained from the flow energy of a medium (W).

10. Method according to claim 9, **characterized in that** the medium (W) is set flowing by a feed pump (13).

11. Method according to one of claims 7 to 10, **characterized in that** the neutron-absorbing fluid (B) contains boric acid.

12. Method according to claim 11, **characterized in that** the boric acid is enriched with the boron isotope that has the mass number 10 (B 10).

## Revendications

1. Dispositif d'apport d'un fluide (B) absorbant les neutrons au circuit (5) primaire d'un réacteur nucléaire à eau sous pression, comprenant
a) une cuve (1) qui peut être emplie du fluide (B) et
b) qui peut être mise en communication par une pompe (3) de refoulement et
c) par un conduit (10) d'amenée avec le circuit (5) primaire,
**caractérisé en ce que** la cuve (1) et la pompe (3) de refoulement
d) peuvent être soumises par l'intermédiaire d'un conduit (8) sous pression à une première pression (p₁) dérivée du circuit (5) primaire.

2. Dispositif suivant la revendication 1, **caractérisé en ce que** la cuve (1) et/ou la pompe (3) de refoulement sont disposées à l'intérieur d'une enceinte de confinement du réacteur nucléaire à eau sous pression.

3. Dispositif suivant l'une des revendications 1 ou 2, **caractérisé en ce que** la pompe (3) de refoulement peut être entraînée par une turbine (11).

4. Dispositif suivant la revendication 3, **caractérisé en ce que** la turbine (11) est une turbine Francis.

5. Dispositif suivant l'une des revendications 3 ou 4, **caractérisé en ce que** la turbine (11) peut être entraînée par un milieu (W) qui peut être mis en écoulement par une pompe (13) d'alimentation.

6. Dispositif suivant la revendication 5, **caractérisé en ce qu'**il est prévu une vanne (17) de commande, pour régler le débit dans la turbine (11).

7. Procédé pour augmenter l'absorption des neutrons dans le circuit (5) primaire d'un réacteur nucléaire à eau sous pression, dans lequel on envoie un fluide (B) absorbant les neutrons d'une cuve (1) au circuit (5) primaire,
**caractérisé en ce que** la cuve (1) est soumise à une première pression (p₁) dérivée du circuit (5) primaire.

8. Procédé suivant la revendication 7, **caractérisé en ce que**
a) on soumet d'abord la cuve (1) à la première pression (p₁) et
b) on envoie ensuite le fluide (B) au circuit (5) primaire.

9. Procédé suivant l'une des revendications 7 ou 8, **caractérisé en ce que** l'énergie nécessaire à l'apport du fluide (B) au circuit (5) primaire est obtenue à partir de l'énergie d'écoulement d'un milieu (W).

10. Procédé suivant la revendication 9, **caractérisé en ce que** le milieu (W) est mis en écoulement par une pompe (13) d'alimentation.

11. Procédé suivant l'une des revendications 7 à 10, **caractérisé en ce que** le fluide (B) absorbant les neutrons contient de l'acide borique.

12. Procédé suivant la revendication 11, **caractérisé en ce que** l'acide borique est enrichi en l'isotope du bore de nombre de masse 10 (B 10).
